(19) **Europäisches Patentamt**
**European Patent Office**
**Office européen des brevets**

(11) **EP 1 540 766 B1**

(12) **EUROPEAN PATENT SPECIFICATION**

(45) Date of publication and mention
of the grant of the patent:
**10.06.2009 Bulletin 2009/24**

(51) Int Cl.:
***H01Q 3/01*** *(2006.01)*     ***H01Q 21/00*** *(2006.01)*
***G01S 3/38*** *(2006.01)*

(21) Application number: **02768248.3**

(22) Date of filing: **30.08.2002**

(86) International application number:
**PCT/SE2002/001554**

(87) International publication number:
**WO 2004/021513 (11.03.2004 Gazette 2004/11)**

(54) **REDUCTION OF NEAR AMBIGUITIES**

VERRINGERUNG VON NAH-MEHRDEUTIGKEITEN

REDUCTION DES AMBIGUITES PROCHES

(84) Designated Contracting States:
**AT BE BG CH CY CZ DE DK EE ES FI FR GB GR
IE IT LI LU MC NL PT SE SK TR**

(43) Date of publication of application:
**15.06.2005 Bulletin 2005/24**

(73) Proprietor: **TELEFONAKTIEBOLAGET LM
ERICSSON
164 83 Stockholm (SE)**

(72) Inventor: **NUMMINEN, Michael
S-433 66 Sävedalen (SE)**

(74) Representative: **Ekwall, Peter
Albihns AB
P.O. Box 142
401 22 Göteborg (SE)**

(56) References cited:
**EP-A2- 0 520 489          US-A- 4 513 385
US-B1- 6 178 140**

• **HODJAT F. ET AL.: 'Nonuniformly spaced linear
and planar array antennas for sidelobe reduction'
IEEE TRANSACTIONS ON ANTENNAS AND
PROPAGATION vol. 26, no. 2, March 1978, pages
198 - 204, XP002959096**

**Description**

TECHNICAL FIELD

The invention refers to a method for enhancing the ratio between the main lobe and grating lobes in an antenna array comprising a number of n antenna elements.

The method comprises the steps of;

- receiving analog signals on a number of m antenna array elements, and;
- producing a radiation diagram for the array from the values in the signals.

The invention also refers to an antenna array system comprising means for performing the method.

BACKGROUND ART

In the field of antenna array systems it is well known to use antenna elements in the antenna array to shape a beam sent out from the antenna array. It is also known to let all the antenna elements in the antenna array receive signals. When the antenna array receives the signals it is possible to use one or several of the antenna elements, or even sub array systems comprising a number of antenna elements. The antenna array can be used, for example, in a radar system or a sonar system and is intended to be used in trying to estimate the direction-of-arrival of a target.

When using the antenna array applications there is a wish to obtain high resolution and accurate estimation of the direction-of-arrival of the target. In order to gain the best performance possible it is common knowledge that there has to be a trade off between the standard deviation $\sigma$ (or variance $\sigma^2$) of the angle for detecting the target and the SNR (Signal to Noise Ratio). The higher the SNR the lower the standard deviation. The standard deviation is coupled to the probability of finding the target. The higher the standard deviation the lower the probability. The so-called "Cramér-Rao Lower Boundary (CRB)", defines the theoretically best ratio between the SNR and the standard deviation $\sigma$ for Additive White Gaussian Noise (AWGN) signals. It is the desire of every antenna user to have a system that performs as close as possible to the CRB. This is due to the fact that for a given SNR the lower the standard deviation the closer to the CRB, i.e. the better the accuracy of the direction-of-arrival estimation of a target.

However, the SNR is also coupled to the performance of the antenna system and the size of the targets. The performance refers to the probability of estimating the direction of arrival of a target. The accuracy depends on the width of the top of the main lobe, if the target is represented by the main lobe. The higher the SNR the more narrow is the top of the main lobe. It is the tapering of the main lobe and the pointyness of the main lobe that tells where the maximum of the main lobe can be found in a radiation diagram. The more pointed the main lobe the better the measuring accuracy when finding the main lobe maximum, i.e. the better measuring accuracy when estimating the direction of arrival of a target.

The lower limit for the SNR, i.e. the lowest performance possible for the antenna system, occurs where the noise in the signal drowns the signal from the target. This becomes clear if one follows the CRB with decreasing SNR. The standard deviation increases with decreasing SNR, i.e. it becomes more difficult to correctly estimate the direction of arrival of the target with a lower SNR. A strong signal compared to a low noise gives a high SNR and a low uncertainty in the estimation of the direction-of-arrival of the target, and vice versa for a low SNR.

It is a desirable feature for an antenna system to have the ability to detect and estimate the direction of arrival of the target with a reasonable probability (reasonably low standard deviation). An optimum is thus sought for the trade off between low standard deviation and low SNR.

As has been stated above, one way to obtain an antenna system with good direction finding ability is to narrow the main lobe. This can be carried out by separating the antenna elements in the antenna array. The more separated the elements are the more narrow the main lobe becomes and thus the better direction finding ability of the system.

However, the separation of the antenna elements gives rise to grating lobes due to the so-called Spatial Aliasing Phenomena. The problem with grating lobes occurs when the antenna elements are separated by more than half a wavelength $\lambda$, i.e. at the Nyqvist frequency. The grating lobes are mathematical products that will be shown in an antenna diagram showing a radiation diagram of the gain $G(\theta)$ versus the azimuth angle $\theta$. The integral over the radiation diagram is constant and independent on the size of the main lobe and the size and number of the grating lobes, i.e. the more the grating lobes the smaller and narrower the main lobe.

The grating lobes will appear on each side of the main lobe and with decreasing amplitude the further away from the main lobe they are found. The two grating lobes closest to the main lobe have the highest amplitude. The grating lobes are thus dependent of the angle and can be interpreted as signals from the main lobe seen from the side angles $\theta$.

The grating lobes cause problems when trying to detect the direction of arrival of a target. The target will randomly skip between the grating lobes for low SNR and will therefore create random errors regarding the detection probability of the target. Thus, the grating lobes generate a high standard deviation.

As has been described above, the more separated the antennas are, the larger the antenna becomes and the narrower the beam. The narrower the beam the better the direction detection probability, i.e. the better the estimation of the direction-of-arrival. However, the more separated the antennas are, more and higher grating lobes will be shown in the radiation diagram of the antenna array.

To sum up the above, when the antenna elements are separated far enough to give a sufficiently narrow main lobe to get a good estimation of the direction-of-arrival, the grating lobes will cause an uncertainty because the target skips between the main lobe and the grating lobes. US-BF 6,178,140 discloses a method according to the preamble of claim 1.

It is an object of the invention to diminish random errors regarding the resolving probability of the target when trying to narrow the main lobe, in order to get better estimation of the direction-of-arrival of a target. It is thus an object of the invention to suppress the first grating lobes compared to the main lobe for the antenna array system, i.e. to increase the ratio between the main lobe and the closest (or first) grating lobes.

DISCLOSURE OF INVENTION

The invention intends to meet the above stated objects with a method for enhancing the ratio between the main lobe and grating lobes in an antenna array comprising a number of n antenna elements.

The method comprises the steps of;

- receiving analog signals on a number of m antenna array elements, and;
- producing a radiation diagram for the array from the values in the digital signals.

The invention is **characterised in that** the method comprises the steps of;

step a) - receiving analog signals on all m antenna elements at a first time $t_1$, where m is an integer equal to or less than n but greater than two;

- producing a first radiation diagram for the array from the values in the digital signals from the first time $t_1$;
- saving the radiation diagram from the first time $t_1$

step b) - switching off or reducing the signal from one (or more) antenna element, located between the two outermost antenna elements of the array, at a second time $t_2$;

- receiving analog signals on all m antenna elements except from the one (or more) switched off or reduced antenna element;
- producing a second radiation diagram for the array from the values in the digital signals from the second time $t_2$;
- saving the second radiation diagram;

step c) -adding the values of the first radiation diagram to the corresponding values of the second radiation diagram and thereby producing a sum radiation diagram.

The method increases the resolution of a target and the estimation of the direction-of-arrival because the angle $\theta_{sum, main}$ for the maximum point of the amplitude of the sum of gains $G_{sum}(\theta_{main})$ is essentially equal to the angles $\theta_{main, t1}$, $\theta_{main, t2}$ for the maximum points of each of the amplitudes of the main lobes $G_{t1}(\theta_{main})$, $G_{t2}(\theta_{main})$ at the first time and the second time $t_1$, $t_2$. The amplitude of the gains at the different times $t_1$, $t_2$ are thus added at their maximum points. Furthermore, the gain $G(\theta_{grating})$ for the first grating lobes for the different times $t_1$, $t_2$ will appear at different angles $\theta_{t1}$, $\theta_{t2}$, which is why the sum of the amplitudes of the first grating lobes at the different times $t_1$, $t_2$ will not increase with as high a factor as for the sum of the grating lobes. The grating lobes will appear to be added more in a lateral direction than in amplitude.

The amplitudes of the main lobes $G_{t1}(\theta_{main})$, $G_{t2}(\theta_{main})$ do not have to be a global maximum in the radiation diagram, but may be a local maximum. However, the amplitude of the sum of gains for the main lobe $G_{sum}(\theta_{main}) = G_{t1}(\theta_{main}) + G_{t2}(\theta_{main})$, which is why $G_{sum}(\theta_{main})$ is a global maximum in the sum radiation diagram. The amplitude of the sum of gains for the main lobe $G_{sum}(\theta_{main})$ becomes a global maximum since the grating lobes $G(\theta_{grating})$ have moved towards the main lobe each time and thus are being added in a more lateral direction. The estimation of the direction-of-arrival is achieved with the formula:

$$\theta_{main} = \arg \max_{\theta} \left\{ \sum_i G_{ti}(\theta) \right\}, \quad \theta \in \left[ -\pi/2 \ , \pi/2 \ \right] \tag{1}$$

, where "i" is index for the different times and " arg max " is the argument for the maximum value for the gain $G_{ti}(\theta)$ in the radiation diagram.

The formula is preferably used according to step c) since $G_{sum}(\theta)$, $G_{t1}(\theta)$ and $G_{t2}(\theta)$ will be vectors when they are represented in a memory storage capacity.

The invention is described as adding one radiation diagram to another, but it must be pointed out that this technique is equivalent to adding the vectors that generate the radiation diagrams. Hence, the gain $G(\theta)$ for one time is added to the gain $G(\theta)$ for another time at the corresponding angles.

The method thus enhances the ratio between the sum of the main lobe and the sum of the grating lobes for the sum of the radiation diagrams compared to the ratio for the main lobe and the grating lobe for any single radiation diagram. One important aspect is that the time domain is used in order to get better estimation of the direction of arrival of a target.

The first part of step a) is to receive analog signals on a certain number of m antenna elements at a first time $t_1$. If m = n the antenna array uses all antenna elements. The antenna elements are advantageously placed in the antenna array with their relative distance equal to or greater than the wavelength divided by two. The wavelength refers to the frequency used in the antenna array system. The relative distance between the antenna elements for a full array fulfils the Nyqvist criteria which is why no grating lobes will appear in the radiation diagram when using a full array.

In a further embodiment of the invention the sequence according to step b) is repeated x times until only the m-x antenna elements on the outermost ends remain. x is an integer less than m-2 and greater than zero, denoting the number of removed or reduced antenna elements. Furthermore, step c) is then used for producing a sum radiation diagram by adding all the corresponding values of the radiation diagrams from all the x times $t_x$.

Preferably, the distance between each of the antenna elements is the wavelength lambda divided by two or less. This meets the Nyqvist criteria which is why no spatial aliasing phenomena will occur for a full array.

The antenna array is connected to an analog to digital converter that samples the analog signals and creates a digital signal. The digital signal comprises values from the analog signal at certain points in time. The digital signal is stored in a suitable memory and the values in the signal may be represented in the radiation diagram as the gain $G(\theta)$ versus the angle $\theta$. The radiation diagram displays the amplification of the analog signal for different angles at certain points in time. The amplification may be referred to as the relation between the different values and the maximum value or as the relation between the different values and an omnidirectional aerial. The gain is therefore normally denoted in decibels.

As has been stated above, the radiation diagrams comprises the values of the gain $G(\theta)$ versus the azimuth angle $\theta$. If the number of m of antenna elements in the first array configuration is less than the maximum number of n of antenna elements, grating lobes will appear in the first radiation diagram. In the first and second radiation diagram the grating lobes appear at different angles dependent on which and how many antenna elements that have been switched off or reduced. In the first radiation diagram the first grating lobes appear on each side of the main lobe at certain angles, e.g. $\theta_{t1} = X_{t1}$ radians (or degrees) and $\theta_{11} = -X_{t1}$ radians (degrees). In the second radiation diagram the first grating lobes appear on each side of the main lobe at certain angles, e.g. $\theta_{t2} = X_{t2}$ radians (or degrees) and $\theta_{t2} = -X_{t2}$ radians (degrees). According to the invention, $X_{t1}$ is greater than $X_{t2}$ and $-X_{t1}$ is lesser than $X_{t2}$, i.e. the first grating lobes in the second radiation diagram appear closer to the main lobe than the first grating lobes in the first radiation diagram. However, the main lobe in the first and second radiation diagrams appear at the same angle $\theta_{main} = X_{t1,main} = X_{t2, main}$ in the radiation diagrams.

The antenna array is advantageously operational where the angle $(\theta)$ is varied between $-\pi/2$-$\pi/2$. The values for the different angles are measured by using the different antenna elements in pairs. In order to be able to measure the effect for different angles for the incoming signal, the antenna array uses at least two antenna elements that preferably are omnidirectional.

The method suppresses the grating lobes by summing the different radiation diagrams and thus reduces near ambiguities.

The invention also refers to an antenna array system comprising means for performing the above method.

The benefits of the invention above will become apparent when describing the embodiments below.

BRIEF DESCRIPTION OF DRAWINGS

The invention will now be described with reference to the drawings below.

Fig. 1 shows an antenna array according to one embodiment of the invention, with a number of $t_1$-$t_4$ configurations in time.

Fig. 2 schematically shows a radiation diagram, with the gain in the signal $(G(\theta))$ versus the angle $\theta$ at the first time for the antenna array in fig. 1.

Fig. 3 schematically shows a radiation diagram, with the gain in the signal $(G(\theta))$ versus the angle $\theta$ at the second time for the antenna array in fig. 1.

Fig. 4 schematically shows a radiation diagram, with the gain in the signal $(G(\theta))$ versus the angle $\theta$ at the third time for the antenna array in fig. 1.

Fig. 5 schematically shows a radiation diagram, with the gain in the signal $(G(\theta))$ versus the angle $\theta$ at the fourth time for the antenna array in fig. 1.

Fig. 6 shows the radiation diagram in fig. 3 overlapping the radiation diagram in fig. 4 together with the sum of the two radiation diagrams (dotted line).

Fig. 7 schematically shows a graph depicting Cramér-Rao Lower Boundary (CRB), and the standard deviation $\sigma$ versus the Signal to Noise Ratio (SNR) when using reduced antenna-array.

Fig. 8 schematically shows a radiation diagram comprising a number of overlapping effect radiation diagrams for all the different antenna configurations of the antenna array according to fig 1, together with the sum of the radiation diagrams (dotted line).

Fig. 9 schematically shows a two-dimensional antenna array with different configurations at different times.

Fig. 10 schematically shows a frontal radiation diagram of an antenna array system according to fig. 9.

Fig 11 diagrammatically shows a block diagram over the method according to the invention according to one embodiment.

## MODES FOR CARRYING OUT THE INVENTION

The description of the different embodiments below shall not be seen as limiting for the invention, but merely as examples within the scope of the claims.

An antenna array 1 uses antenna elements 2 for receiving analog signals. The antenna array 1 is connected to an analog to digital converter that samples the analog signals and creates a digital signal. The digital signal comprises values from the analog signal at certain points in time. The values may be represented as the gain $G(\theta)$ versus the angle $\theta$. The values may be presented in a radiation diagram in order to display the strength of the analog signal for different angles at certain points in time.

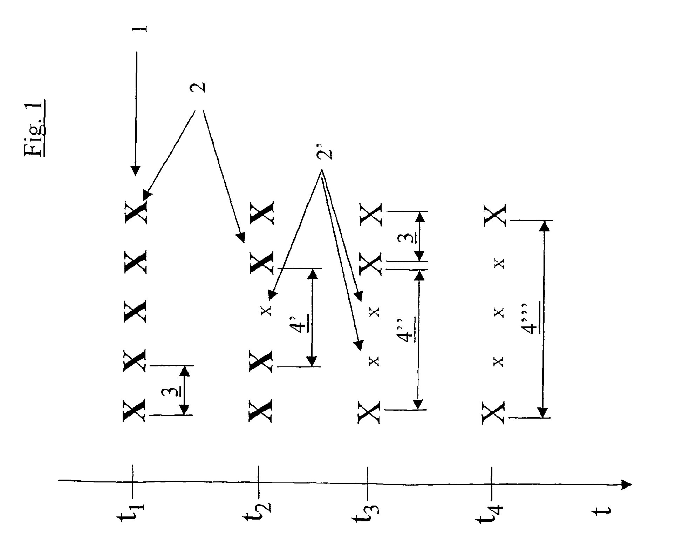

Fig. 1 shows an antenna array 1 according to one embodiment of the invention comprising five antenna elements 2, with a number of configurations in time. The antenna elements 2 are depicted with a large X when in use.

At the first time $t_1$ the antenna array 1 uses all of the antenna elements 2. The relative distance 3 between the antenna elements advantageously fulfils the Nyqvist criteria.

At the second time $t_2$ the antenna array 1 uses all but one of the antenna elements 2. The relative distance 4' between the subgroups of antenna elements does not fulfil the Nyqvist criteria.

At the third time $t_3$ the antenna array 1 uses all but two of the antenna elements 2. The relative distance 4" between the subgroups of antenna elements does not fulfil the Nyqvist criteria. The relative distance between the subgroups of antenna elements at the third time $t_3$ are greater than at the second time $t_2$.

At the fourth time $t_4$ the antenna array 1 uses all but three of the antenna elements 2. The relative distance 4''' between the subgroups of antenna elements does not fulfil the Nyqvist criteria. The relative distance between the subgroups of antenna elements at the fourth time $t_4$ are greater than at the third time $t_3$.

As can be seen in fig. 1, the configuration of the antenna array 1 at the fourth time $t_4$ uses only the two most widely separated antenna elements 2.

With "not using" an antenna element or "removing" one antenna element, means that the signals from the antenna array 1 are reduced or blocked. This is advantageously done before the sampling of the signals, but may be carried out after the sampling. However, if the antenna elements 2 are to be reduced or blocked after the sampling, the system should require one sampling device per antenna element. In fig. 1 the reduced antenna elements 2 are depicted with a small x and denoted with 2'.

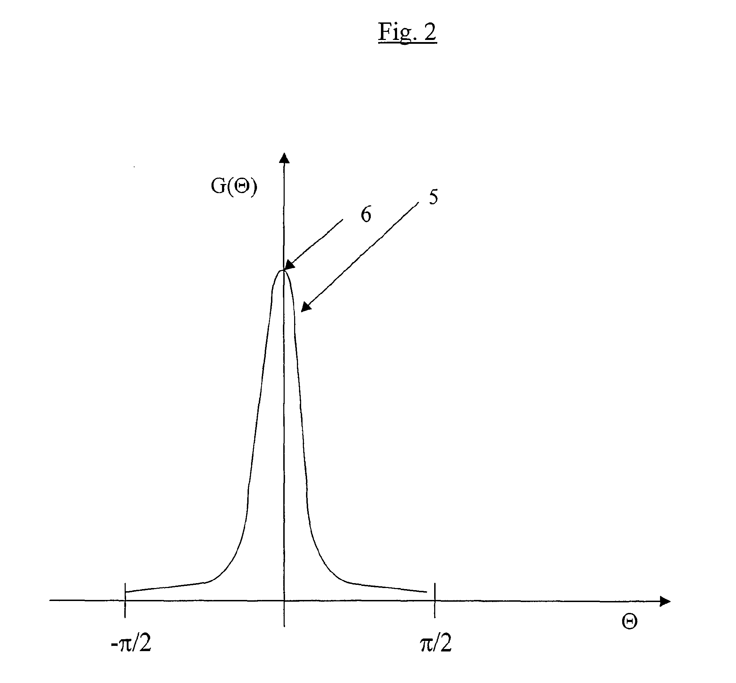

The use of different antenna elements 2 according to the above increases the phase centre between subgroups of antenna elements 2. At the fourth time $t_4$, the distance between the two outermost antenna elements 2 gives the maximum increase in phase centre for the antenna array 1 according to the embodiment. As has been described before, the increase in distance between the antenna elements 2 narrows the main lobe 5 but decreases the amplitude (see figs. 2-6). One drawback is the generation of grating lobes 7 which cause an increase in the standard deviation. However, for every increase in distance between the antenna elements 2 according to the above, the closer to the main lobe 5 the grating lobes 7 will appear.

Fig. 2 schematically shows a radiation diagram, with the gain in the signal $G(\theta)$ versus the angle $\theta$ for a full antenna array 1 corresponding to the first time $t_1$. If the distance 3 between the antenna elements 2 is equal to or less than half the wavelength, no grating lobes 7 will appear. In this embodiment the distance 3 between the antenna elements 2 is equal to or less than half the wavelength, i.e. fulfils the Nyqvist criteria. In fig. 2 this becomes apparent since only a main lobe 5 appears in the radiation diagram. In this embodiment, there are no errors in the estimation of the direction-of-arrival since no grating lobes 7 appear. The maximum point 6 for the radiation diagram coincides with the apex of the main lobe 5. However, the width of the top of the main lobe 5 gives rise to uncertainty regarding the estimation of the direction-of-arrival.

As can be seen in fig. 1, the antenna array 1 is advantageously operational where the angle $(\theta)$ is varied between $-\pi/2-\pi/2$.

In fig. 2 the main lobe 5 appears within the range of $-\pi/2-\pi/2$.

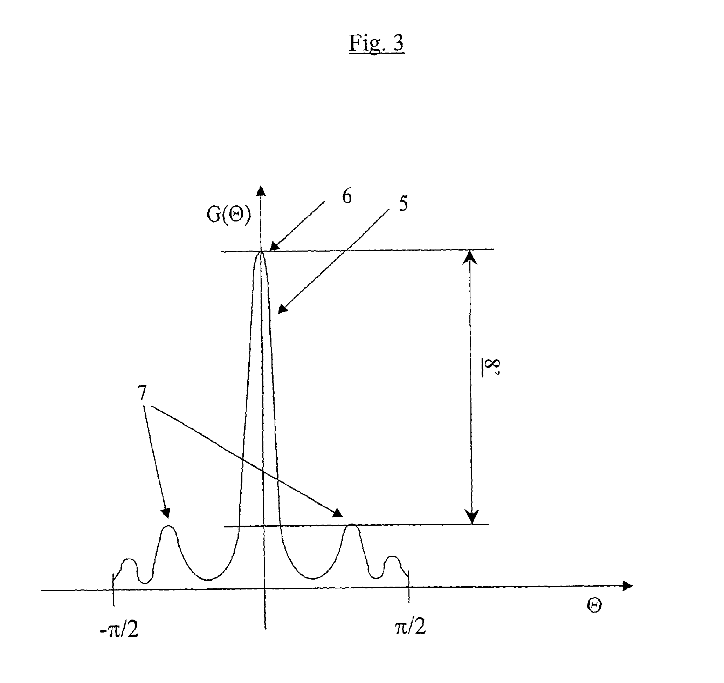

Fig. 3 schematically shows a radiation diagram, with the gain in the signal $G(\theta)$ versus the angle $\theta$ for a reduced antenna array 1 corresponding to the second time $t_2$. Here the relative distance 4' between the central antenna elements 2 is more than half the wavelength, which is why first grating lobes 7 appear in the radiation diagram. In fig. 3 this becomes apparent since both a main lobe 5 and two grating lobes 7 appear in the radiation diagram. In this embodiment, the first grating lobes 7 give rise to an uncertainty regarding the estimation of the direction-of-arrival.

The maximum point 6 for the radiation diagram coincides with the apex of the main lobe 5, but the main lobe 5 has a lesser amplitude than at the first time $t_1$. However, the width of the top of the main lobe 5 is narrower than at the first time $t_1$ but still gives rise to uncertainty.

In fig. 3, the grating lobes 7 appear outside a first range, essentially symmetrically around the main lobe 5. A first distance 8' between the top 6 of the main lobe 5 and top of the highest grating lobes 7 are also depicted in fig 3.

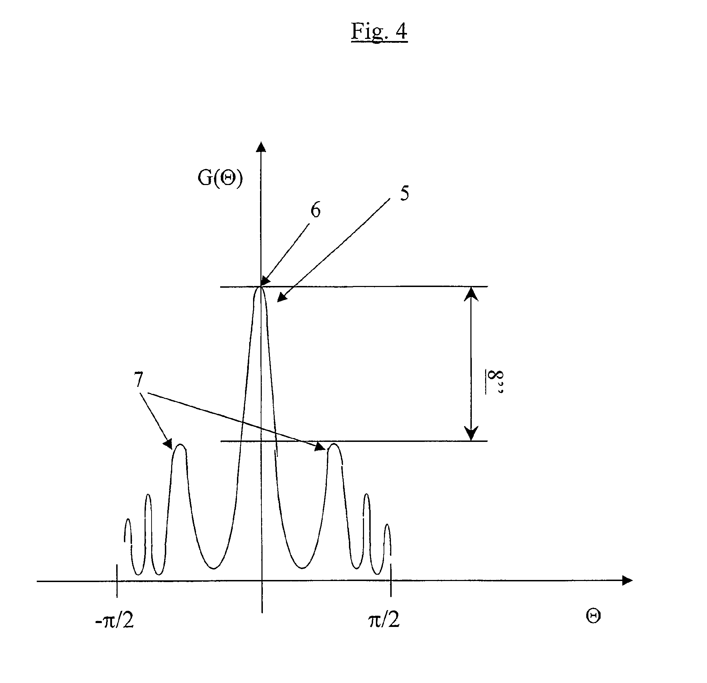

Fig. 4 schematically shows a radiation diagram, with the gain in the signal $G(\theta)$ versus the angle $\theta$ for a reduced antenna array 1 corresponding to the third time $t_3$. Here the relative distance 4" between the central antenna elements 2 is even greater than at the second time $t_2$ which is why even more grating lobes 7 appear in the radiation diagram. In fig. 4 this becomes apparent since both a main lobe 5 and several grating lobes 7 appear in the radiation diagram. The first grating lobes 7 at the third time $t_3$ appear closer to the main lobe 5 than at the second time 2 and also have greater amplitude. In this embodiment, the grating lobes 7 give rise to even greater uncertainty regarding the estimation of the direction-of-arrival.

The maximum point 6 for the radiation diagram coincides with the apex of the main lobe 5, but the main lobe 5 has a lesser amplitude than at the second time $t_2$, which is why the ratio between the main lobe 5 and the first grating lobes 7 has decreased compared to the ratio at the second time. However, the width of the top of the main lobe 5 is narrower than at the first time $t_1$ but still gives rise to uncertainty.

In fig. 4, the grating lobes 7 appear outside a second range, essentially symmetrically around the main lobe 5. A second distance 8" between the top 6 of the main lobe 5 and top of the highest grating lobes 7 are also depicted in fig 4.

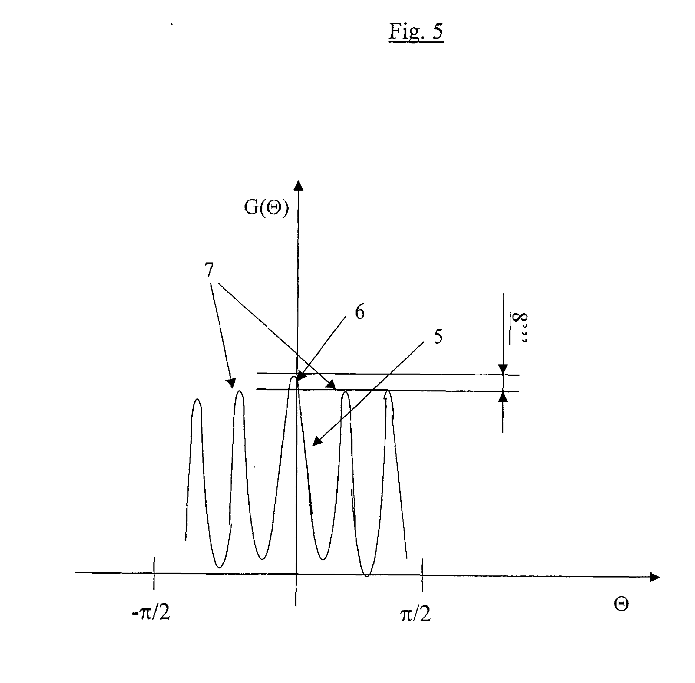

Fig. 5 schematically shows a radiation diagram, with the gain in the signal $G(\theta)$ versus the angle $\theta$ for a reduced antenna array 1 corresponding to the fourth time $t_4$. In this embodiment the antenna array 1 configuration only comprises the two outermost lying antenna elements 2. Here the relative distance 4''' between the central antenna elements 2 is thus even greater than at the third time $t_3$ which is why even more grating lobes 7 appear in the radiation diagram. In fig. 5 this becomes apparent since both a main lobe 5 and several grating lobes 7 appear in the radiation diagram. The first grating lobes 7 at the fourth time $t_4$ appear closer to the main lobe 5 than at the second time 2 and also have greater amplitude. In this embodiment, the grating lobes 7 give rise to even greater uncertainty regarding the estimation of the direction-of-arrival.

The maximum point 6 for the radiation diagram coincides with the apex of the main lobe 5, but the main lobe 5 has a lesser amplitude than at the third time $t_3$, which is why the ratio between the main lobe 5 and the first grating lobes 7 has decreased compared to the ratio at the third time. However, in fig. 5 the amplitudes of the first grating lobes 7 are essentially as high as for the main lobe 5. Furthermore, all grating lobes in fig. 5 theoretically have the same amplitude. (This may be compared to the previously known spatial two-element comb filter.) This configuration of the antenna array 1 gives rise to a large uncertainty for the estimation of the direction-of-arrival of a target, since it is not obvious that the target will appear in the main lobe 5, but may appear in one of the closest grating lobes 7.

However, the width of the top of the main lobe 5 at the fourth time $t_4$ is the most narrow compared to all of the antenna configurations. If it is certain that the target appears in the main lobe 5, the narrow top of the main lobe 5 gives a good estimation of the direction-of-arrival. One problem thus to be solved is the uncertainty dependent on the grating lobes 7.

In fig. 5, the grating lobes 7 appear outside a third range, essentially symmetrically around the main lobe 5. A third distance 8''' between the top 6 of the main lobe 5 and top of the highest grating lobes 7 are also depicted in fig 5.

One important thing to notice, however, is that the centre line of the main lobe 5 is mainly stationary, i.e. has not moved, for all the times $t_1$ - $t_4$, but the first grating lobes 7 has moved closer to the main lobe 5 the more separated the antenna elements 2 are. In figs. 2-5 the centre line coincides with the vertical axis of the radiation diagram, i.e. at the angle $\theta = 0$ rad.

In figs. 3-5 a relative distance 8', 8", 8''' has been depicted, which denotes the distance between the top of the main lobe 5 and the top of the first grating lobes 7.

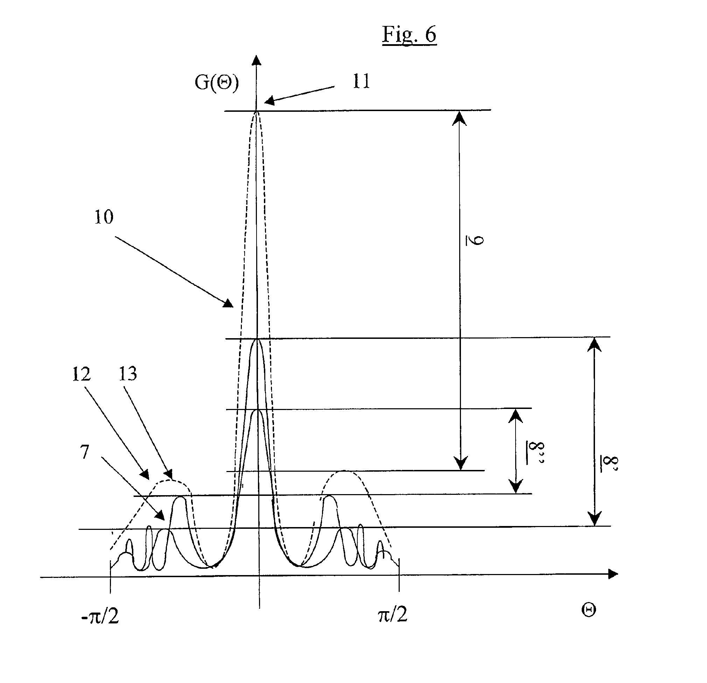

Fig. 6 shows the radiation diagram in fig. 3 overlapping the radiation diagram in fig. 4. As can be seen in fig. 6, the centre line of the main lobes 5 has not moved, but the grating lobes 7 from the radiation diagram in fig. 4, i.e. at the third time $t_3$ has moved closer to the centre of the main lobe 5 than the grating lobes 7 from the radiation diagram in fig. 3, i.e. at the second time $t_2$. Furthermore, it becomes obvious from fig. 5 that the main lobe 5 at the third time is more narrow but with less amplitude than the main lobe 5 at the second time.

Fig. 6 also shows the sum of the values from the radiation diagram in fig. 3 and the radiation diagram in fig. 4 (dotted line). The sum of the two radiation diagrams shows a sum of the main lobes 10 and the sum of the grating lobes 12. In fig. 6 it is evident that the increase in height of the sum of the main lobes 10 significally exceeds the increase in height of the sum of the grating lobes 12. It is obvious from fig. 6 that the sum of the grating lobes 12 has gained some height, but that the displacement of the grating lobes 7 (from the different times $t_1$-$t_4$ ) towards the centre line of the main lobe 5 (due to the increase in distance between the antenna elements) causes a build up of the sum of the grating lobes 12 in a lateral direction more than in height. Lateral direction refers to the direction that coincides with the extension of the angular axis in the radiation diagram.

In fig. 6 the first distance 8' and the second distance 8" from figs. 3 and 4 are depicted. In fig. 6 a fourth distance 9 is also depicted. The fourth distance 9 is the distance between the top 11 of the sum of the main lobes 10 and the top 13 of the sum of the grating lobes 12.

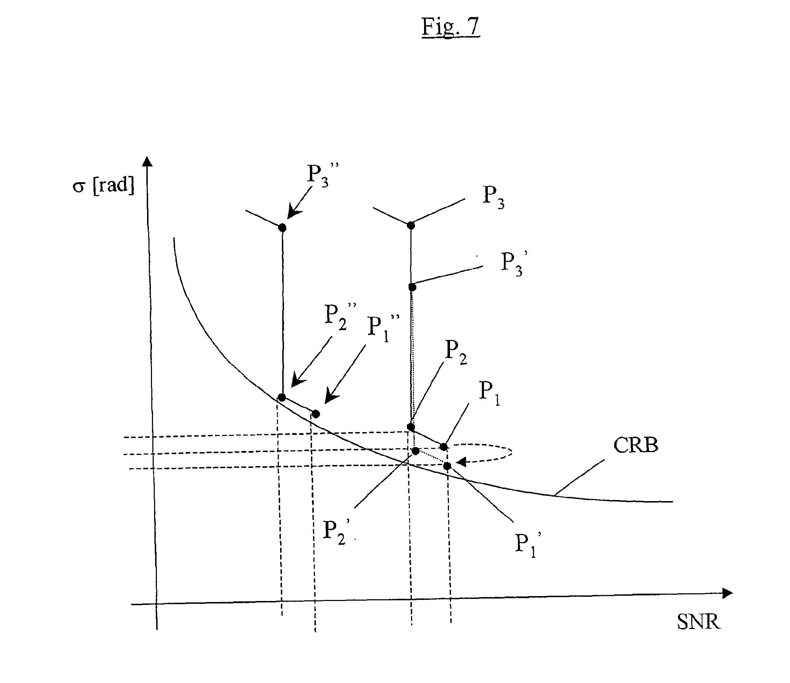

It is evident from fig. 6 that the fourth distance 9 exceeds that of the first and second distance 8', 8". This is because the ratio between the sum main lobe 10 and the sum of grating lobes 12 has enhanced compared to the ratio between the main lobe and the grating lobes according to the antenna array 1 configuration according to figs. 3 and 4. According to the described embodiment of the invention, the summation of all, or some of, the radiation diagrams of the antenna configurations possible with an antenna array 1 according to fig. 1, yields the displacement of the points described in connection with fig. 7. This is due to the enhanced ratio between the sum main lobe 10 and the sum of grating lobes 12, compared to any one of the possible radiation diagrams taken alone.

Fig. 7 schematically shows a graph depicting the Cramér-Rao Lower Boundary (CRB) and the standard deviation $\sigma$ versus the Signal to Noise Ratio (SNR). The standard deviation is a deviation of the angle. Figure 7 also shows a first point $P_1$ at a certain distance from CRB and a second point $P_2$ at a second location. The first point $P_1$ has a higher SNR and consequently a lower standard deviation $\sigma$ than the second point $P_2$. The first point and the second point symbolise an antenna array 1 system with decreasing SNR from the first point $P_1$ to the second point $P_2$ along the CRB. At $P_2$ there is a threshold to a third point $P_3$. The threshold is a result of grating lobes 7 appearing at lower SNR. The grating lobes 7 give an uncertainty in the angular estimation to the target.

Fig. 7 shows that a SNR higher than at point two $P_2$ gives a good probability of estimation of the direction-of-arrival of a target at the main lobe 5. However this is only true if the maximum point 6 of the radiation diagram coincide with the maximum point of the main lobe 5. With a lower SNR than at the second point $P_2$, it is not certain that the maximum point 6 of the radiation diagram is where the main lobe 5 is, but the maximum point 6 might be deemed by the system to be at one of the closest grating lobes 7. If this is the case, the estimation of the direction-of-arrival of a target will be carried out at the grating lobe 7.

If one of the grating lobes 7 has been deemed by the system to be the maximum point and if the amplitude of the grating lobe 7 is lesser than the amplitude of the main lobe 5, the distance from the top of the main lobe to the top of the grating lobe may be greater than the width of the top of the main lobe. This gives rise to a considerable increase in the uncertainty for the estimation of the direction-of-arrival of a target and thus an increase of the standard deviation. This scenario is depicted in fig. 7 as a jump from the second point $P_2$ to the third point $P_3$.

When reducing the array according to the invention the width of the main lobe 5 will decrease, and the threshold will move closer to the CRB but with a demand for a higher SNR, than for the previous configuration of the array. This is depicted in fig. 7 where the second point $P_2$ has moved to the second point prime $P_2{}'$.

As pointed out before, the decrease of the main lobe 5 width decreases the standard deviation $\sigma$, but puts a demand for a higher SNR. This has been pointed out in fig. 7 as moving the first, second and the third points $P_1$, $P_2$ and

$P_3$ to the corresponding points prime $P_1'$, $P_2'$ and $P_3'$.

As pointed out before, one problem with separating the antenna elements 2 is that at one point, grating lobes 7 will appear in the radiation diagram due to the separation. The grating lobes 7 will generate a decrease in the probability of estimation of the direction-of-arrival of the target. The target will appear randomly in the grating lobes 7 as a defect estimation of the direction-of-arrival. The sudden appearance of grating lobes 7, and thus the decrease in the probability, is shown in fig. 7 as a jump from the second point $P_2$ to a third point $P_3$. The third point $P_3$ has a higher standard deviation $\sigma$ than the second point $P_2$ for essentially the same SNR.

According to the invention, the first point $P_1$ to the third point $P_3$ scenario described above may be displaced along the CRB in a direction with decreasing SNR, by enhancing the ratio between the main lobe 5 and grating lobes 7. By enhancing the ratio between the main lobe 5 and the grating lobes 7, the first point $P_1$ to the third point $P_3$ will be displaced to first point double prime $P_1''$ to the third point double prime $P_3''$ depicted in fig. 7. As can be seen in fig. 7, such a displacement allows a lower SNR before the threshold at the second point double prime $P_2''$ to the third point double prime $P_3''$ due to the appearance of the grating lobes 7.

According to the invention, the ratio between the main lobe 5 and the closest grating lobes 7 is increased by adding the values from different configurations of the antenna array.

As a result of the displacement described above, it is possible to separate the antenna elements 2 to get a narrow main lobe and still enable the antenna system to operate at a low SNR. The invention suppresses the grating lobes 7 at the same time as the directivity increases for the antenna array 1 system.

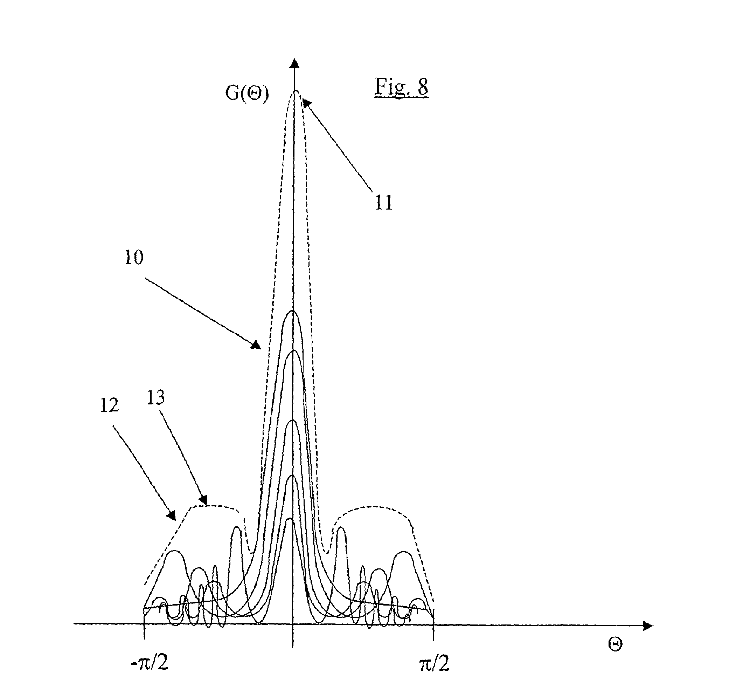

Fig. 8 shows a radiation diagram comprising all the radiation diagrams in figs. 2-5 overlapping each other together with the sum of the radiation diagrams (dotted line). Fig. 8 further shows the benefits of the invention described above.

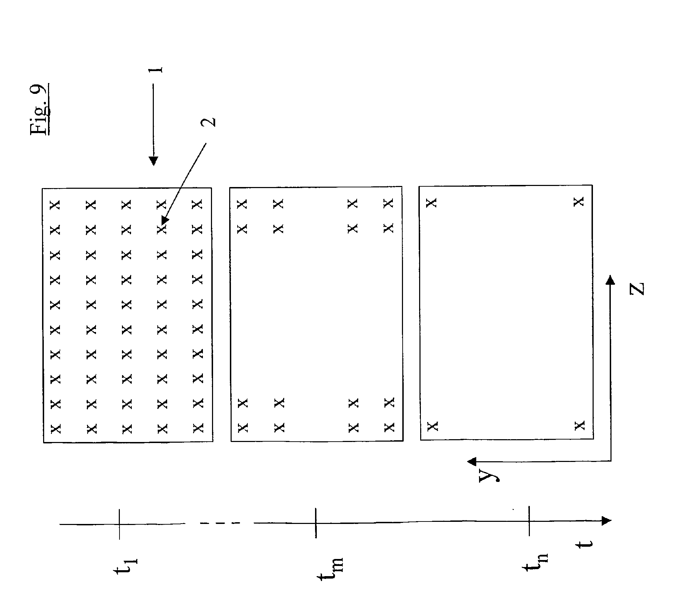

Fig. 9 shows a two-dimensional antenna array 1 system according to one embodiment of the invention, with a number of configurations in time $t_1$, $t_m$, and $t_n$. The antenna array 1 system comprises five rows along an Y-axis. Each row comprises ten antenna elements 2 along a Z-axis. The antenna elements 2 are reduced or switched off in the same manner as described in fig. 1. The invention described above is thus possible to use on two-dimensional antenna arrays.

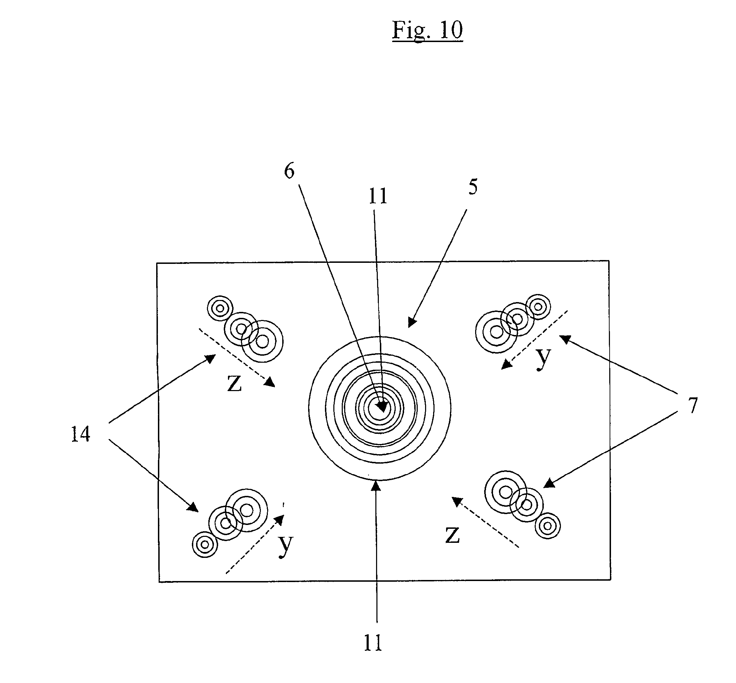

Fig. 10 shows frontal radiation diagram of an antenna array 1 system according to fig. 9. The displacement of the grating lobes 7 towards the centre of the main lobes 5 has been depicted as a number of grating lobes 7 on an Z-axis on opposite sides of the main lobes 5 and a number of grating lobes 7 on an Y-axis on opposite sides of the main lobes 5. The displacement of the grating lobes 7 along the Z-axis corresponds to the removal of antenna elements 2 along the Z-axis in fig. 9. The displacement of the grating lobes 7 along the Y-axis corresponds to the removal of antenna elements 2 along the Y-axis in fig. 9.

The sum of all or some of the antenna configurations possible with an antenna array 1 system according to fig. 9, yields a corresponding result as the embodiment described in figs. 1-7, i.e. a displacement of the points in fig. 7 due to the enhanced ratio between the sum main lobe 5 and the sum of grating lobes 7.

In fig. 10 the top 11 of the sum of the main lobes 5 are depicted. As is obvious from fig. 10, the maximum points of the main lobes 5 coincide with the maximum point of the sum main lobe 10.

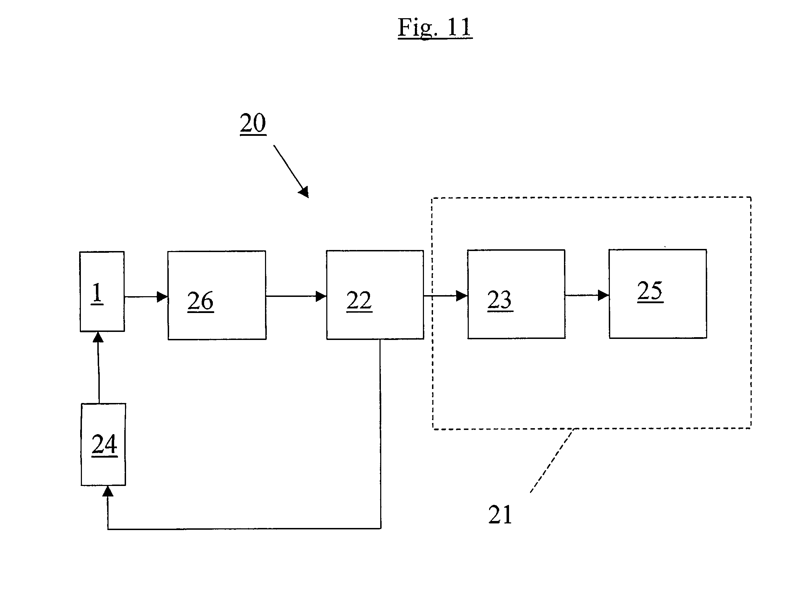

Fig 11 shows a block diagram over the method according to the invention according to one embodiment. The blocks in fig. 11 depict a number of means suitable for performing the method.

Fig. 11 shows an antenna array 1 system 20 comprising an antenna array 1 with a number of n antenna elements 2. The antenna array 1 system comprises means 21 for enhancing the ratio between the main lobe 5 and grating lobes 7.

The system comprises the antenna array 1 adapted for receiving analog signals on a number of m antenna array 1 elements 2 and means 22 for producing a radiation diagram for the array from the values in the digital signals.

The system also comprises;

    a)

    - the antenna array 1 adapted for receiving analog signals on all m antenna elements 2 at a first time $t_1$, where m is an integer equal to or less than n but greater than two;
    - means 22 for producing a first radiation diagram for the array 1 from the values in the digital signals from the first time $t_1$;
    - means 23 for saving the first radiation diagram from the first time $t_1$;

    b)

    - means 24 for switching off or reducing the signal from one antenna element 2', located between the two outermost antenna elements 2 of the array, at a second time $t_2$;
    - the antenna array 1 adapted for receiving analog signals on all m antenna elements 2 except from the one switched off or reduced antenna element 2';

- means 22 for producing a second radiation diagram for the array from the values in the digital signals from the second time $t_2$
- means 23 for saving the second radiation diagram;

c)

- means 25 for adding the values of the first radiation diagram to the corresponding values of the second radiation diagram and thereby producing a sum radiation diagram.

Furthermore the system comprises;

- means 22, 23, 24 for repeating the sequence according to b) x times until only the m-x antenna elements 2 on the outermost ends remain, where x is an integer less than m-2 and greater than zero, denoting the number of removed or reduced antenna elements 2', and where;
- means 25 according to c) for producing a sum radiation diagram by adding all the corresponding values of the radiation diagrams from all the x times $t_x$.

The system also comprises means 26 for converting the analog signals to digital signals by sampling, before the radiation diagrams are produced.
The means 22 for producing the radiation diagrams comprises means for representing the values in the radiation diagrams as the gain $G(\theta)$ for a number of angles $\theta$.
The above mentioned means may be any suitable devices for handling signals and for performing mathematical tasks, for example a computer.
The embodiments above have been described as removing a number of antenna elements, but by removing it is to be understood that the antenna elements 2 are dampened or reduced rather than removed.
Furthermore the invention can be used for the same frequency between the different times or for different frequencies.
The invention is not limited to the embodiments above, but may be amended within the scope of the claims.

**Claims**

1. Method for enhancing the ratio between the main lobe (5) and grating lobes (7) in an antenna array (1) comprising a number of n antenna elements (2), which method comprises the steps of;

   - receiving analog signals on a number of m antenna array (1) elements (2);
   - producing a radiation diagram for the array (1) from the signals, and **characterized in that** the method comprises the steps of;

      step a)

         - receiving analog signals on all m antenna elements (2) at a first time ($t_1$), where m is an integer equal to or less than n but greater than two;
         - producing a first radiation diagram from the signals from the first time ($t_1$);
         - saving the values representing the radiation diagram from the first time ($t_1$)

      step b)

         - switching off or reducing the signal from one antenna element (2'), located between the two outermost antenna elements (2) of the m antenna elements, at a second time ($t_2$);
         - receiving analog signals on all m antenna elements (2) except for the one switched off or reduced antenna element (2');
         - producing a second radiation diagram from the signals from the second time ($t_2$)
         - saving the values representing the second radiation diagram;

      step c)

- adding the values of the first radiation diagram to the corresponding values of the second radiation diagram and thereby producing a sum of values representing a sum radiation diagram.

2. Method according to claim 1, **characterized in that;**

- the sequence according to step b) is repeated x times until only the m-x antenna elements (2) on the outermost ends remain, where x is an integer less than m-2 and greater than zero, denoting the number of removed or reduced antenna elements (2'), and where;
- step c) is used for producing a sum radiation diagram by adding all the corresponding values of the radiation diagrams from all the x times ($t_x$).

3. Method according to any one of the previous claims, **characterized in that** the analog signals are converted to digital signals by sampling before the radiation diagrams are produced.

4. Method according to any one of the previous claims, **characterized in that** the values are represented in the radiation diagrams as the gain ($G(\theta)$) for a number of angles ($\theta$).

5. Method according to any one of the previous claims, **characterized in that** the distance between each of the antenna elements (2) is the wavelength lambda divided by two or less.

6. Method according to any one of the previous claims, **characterized in that** the angle ($\theta$) is varied between $-\pi/2$ and $\pi/2$.

7. Antenna array system (20) comprising an antenna array (1) with a number of n antenna elements (2), where the antenna array system (20) comprises means (21) for enhancing the ratio between the main lobe (5) and grating lobes (7), wherein the system comprises;

- the antenna array (1) adapted for receiving analog signals on a number of m antenna array elements (2), and;
- means (22) for producing a radiation diagram for the array from the digital values of the analog signals,

**characterized in that** the system comprises;

a)

- the antenna array (1) receiving analog signals on all m antenna elements (2) at a first time ($t_1$), where m is an integer equal to or less than n but greater than two;
- means (22) for producing a first radiation diagram for the array

(1) from the digital values of the analog signals from the first time ($t_1$);

- means (23) saving the values representing the radiation diagram from the first time ($t_1$)

b)

- means (24) switching off or reducing the signal from one antenna element (2'), located between the two outermost antenna elements (2) of the m antenna elements, at a second time ($t_2$);
- the antenna array (1) receiving analog signals on all m antenna elements (2) except from the one switched off or reduced antenna element (2');
- means (22) producing a second radiation diagram for the array from the digital values of the analog signals from the second time ($t_2$)
- means (23) saving the values representing the second radiation diagram;

c)

- means (25) adding the values of the first radiation diagram to the corresponding values of the second radiation diagram and thereby producing a sum of values representing a sum radiation diagram.

8. Antenna array system (20) according to claim 7, **characterized in that** the system comprises;

- means (22, 23, 24) for repeating the sequence according to b) x times until only the m-x antenna elements (2) on the outermost ends remain, where x is an integer less than m-2 and greater than zero, denoting the number of removed or reduced antenna elements (2'), and;
- means (25) according to c) for producing a sum radiation diagram by adding all the corresponding values of the radiation diagrams from all the x times ($t_x$).

**9.** Antenna array system (20) according to claim 7 or 8, **characterized in that** the system comprises means (26) for converting the analog signals to digital signals by sampling before the radiation diagrams are produced.

**10.** Antenna array system (20) according to any one of claims 7-9, **characterized in that** the system comprises means (22) for representing the values in the radiation diagrams as the gain ($G(\theta)$) for a number of angles ($\theta$).

**11.** Antenna array system (20) according to any one of claims 7-10, **characterized in that** the distance between each of the antenna elements (2) is the wavelength lambda divided by two or less.

**Patentansprüche**

**1.** Ein Verfahren zum Verbessern des Verhältnisses zwischen der Hauptkeule (5) und Beugungskeulen (7) in einem Antennen-Array (1), umfassend eine Anzahl von n Antennenelementen (2), wobei das Verfahren die Schritte umfasst:

- Empfangen von analogen Signalen auf einer Anzahl von m Antennen-Array-(1)-Elementen (2);
- Erstellen eines Strahlungsdiagramms für das Array (1) von den Signalen, und **dadurch gekennzeichnet, dass** das Verfahren die Schritte umfasst:

Schritt a)

- Empfangen von analogen Signalen auf allen m Antennenelementen (2) bei einer ersten Zeit ($t_1$), wobei m eine ganze Zahl gleich oder kleiner als n ist aber größer als 2;
- Erstellen eines ersten Strahlungsdiagramms von den Signalen von der ersten Zeit ($t_1$);
- Speichern der Werte, die das Strahlungsdiagramm von der ersten Zeit ($t_1$) repräsentieren;

Schritt b) - Ausschalten oder Verringern des Signals von einem Antennenelemente (2'), das sich zwischen den zwei äußersten Antennenelementen (2) der m Antennenelemente zu einer zweiten Zeit ($t_2$) befindet;

- Empfangen von analogen Signalen auf allen m Antennenelementen (2) außer für das eine abgeschaltete oder verringerte Antennenelement (2');
- Erstellen eines zweiten Strahlungsdiagramms von den Signalen von der zweiten Zeit ($t_2$) ;
- Speichern der Werte, die das zweite Strahlungsdiagramm repräsentieren;

Schritt c) - Hinzufügen der Werte des ersten Strahlungsdiagramms zu den entsprechenden Werten des zweiten Strahlungsdiagramms, und dabei Erstellen einer Summe von Werten, die ein Summenstrahlungsdiagramm repräsentieren.

**2.** Verfahren nach Anspruch 1, **dadurch gekennzeichnet, dass;**

- die Sequenz nach Schritt b) x-mal wiederholt wird, bis nur die m-x-Antennenelemente (2) auf den äußersten Enden übrigbleiben, wobei x eine ganze Zahl kleiner als m-2 ist und größer als Null, bezeichnend die Anzahl der entfernten oder verringerten Antennenelemente (2'), und wobei;
- Schritt c) verwendet wird zum Erstellen eines Summenstrahlungsdiagramms durch Hinzufügen aller der entsprechenden Werte der Strahlungsdiagramme von allen den x-Zeiten ($t_x$).

**3.** Verfahren nach einem der vorhergehenden Ansprüche, **dadurch gekennzeichnet, dass** die analogen Signale umgewandelt werden zu digitalen Signalen durch Abtasten bevor die Strahlungsdiagramme erstellt werden.

**4.** Verfahren nach einem der vorhergehenden Ansprüche, **dadurch gekennzeichnet, dass** die Werte repräsentiert werden in den Strahlungsdiagrammen als die Verstärkung ($G(\theta)$) für eine Anzahl von Winkeln ($\theta$).

5.  Verfahren nach einem der vorhergehenden Ansprüche, **dadurch gekennzeichnet, dass** der Abstand zwischen jedem der Antennenelemente (2) die Wellenlänge Lambda ist, geteilt durch 2 Zwei oder weniger.

6.  Verfahren nach einem der vorhergehenden Ansprüche, **dadurch gekennzeichnet, dass** der Winkel ($\theta$) variiert wird zwischen $-\pi/2$ und $\pi/2$.

7.  Ein Antennen-Array-System (20), umfassend ein Antennen-Array (1) mit einer Anzahl von n Antennenelementen (2), wobei das Antennen-Array-System (20) Mittel (21) umfasst zum Verbessern des Verhältnisses zwischen der Hauptkeule (5) und Beugungskeulen bzw. Grating Lobes (7), wobei das System umfasst:

    - das Antennen-Array (1), ausgebildet zum Empfangen von analogen Signalen auf einer Anzahl von m Antennen-Array-Elementen (2), und;
    - Mittel (22) zum Erstellen eines Strahlungsdiagramms für das Array von den digitalen Werten der analogen Signale,

    **dadurch gekennzeichnet, dass** das System umfasst:

    a)

    - das Antennen-Array (1), das analoge Signale auf allen m Antennenelementen (2) zu einer ersten Zeit ($t_1$) empfängt, wobei m eine ganze Zahl gleich zu oder kleiner als n ist aber größer als 2;
    - Mittel (22) zum Erstellen eines ersten Strahlungsdiagramms für das Array (1) von den digitalen Werten der analogen Signale von der ersten Zeit ($t_1$);
    - Mittel (23), das die Werte speichert, die das Strahlungsdiagramm von der ersten Zeit ($t_1$) repräsentieren;

    b)

    - Mittel (24), das das Signal von einem Antennenelemente (2') ausschaltet oder verringert, das sich zwischen den zwei äußersten Antennenelementen (2) der m Antennenelemente bei einer zweiten Zeit ($t_2$) befindet;
    - das Antennen-Array (1), das analoge Signale auf allen m Antennenelementen (2) empfängt, außer von einem abgeschalteten oder verringerten Antennenelement (2');
    - Mittel (22), das ein Strahlungsdiagramm für das Array von den digitalen Werten der analogen Signale von der zweiten Zeit ($t_2$) erstellt;
    - Mittel (23), das die Werte speichert, die das zweite Strahlungsdiagramm repräsentieren;

    c)

    - Mittel (25), das die Werte des ersten Strahlungsdiagramms hinzufügt zu den entsprechenden Werten des zweiten Strahlungsdiagramms, und dabei eine Summe von Werten erstellt, die ein Summenstrahlungsdiagramm repräsentieren.

8.  Antennen-Array-System (20) nach Anspruch 7, **dadurch gekennzeichnet, dass** das System umfasst:

    - Mittel (22, 23, 24) zum x-mal Wiederholen der Sequenz nach b), bis nur die m-x-Antennenelemente (2) auf den äußersten Enden übrigbleiben, wobei x eine ganze zahl kleiner als m-2 und größer als Null ist, bezeichnend die Anzahl der entfernten oder verringerten Antennenelemente (2'), und;
    - Mittel (25) nach c) zum Erstellen eines Summenstrahlungsdiagramms durch Hinzufügen aller der entsprechenden Werte der Strahlungsdiagramme von allen den x-Zeiten ($t_x$).

9.  Antennen-Array-System (20) nach Anspruch 7 oder 8, **dadurch gekennzeichnet, dass** das System Mittel (26) umfasst zum Umwandeln der analogen Signale in digitale Signale durch Abtasten bevor die Strahlungsdiagramme erstellt werden.

10. Antennen-Array-System (20) nach einem der Ansprüche 7 - 9, **dadurch gekennzeichnet, dass** das System Mittel (22) umfasst zum Repräsentieren der Werte in den Strahlungsdiagrammen als die Verstärkung ($G(\theta)$) für eine Anzahl von Winkeln ($\theta$).

11. Antennen-Array-System (20) nach einem der Ansprüche 7-10, **dadurch gekennzeichnet, dass** der Abstand zwischen jedem der Antennenelemente (2) die Wellenlänge Lambda geteilt durch 2 Zwei oder weniger, ist.

**Revendications**

1. Procédé pour accroître le rapport entre le lobe principal (5) et les lobes en treillis (7) dans une antenne réseau (1) comportant un nombre de n éléments d'antenne (2), lequel procédé comprend les étapes qui consistent :

  - à recevoir des signaux analogiques sur un nombre de m éléments (2) de l'antenne réseau (1) ;
  - à produire un diagramme de rayonnement pour le réseau (1) à partir des signaux, et le procédé étant **caractérisé en ce qu'**il comprend les étapes qui consistent :

    étape a)

      - à recevoir des signaux analogiques sur la totalité des m éléments d'antenne (2) à un premier instant ($t_1$), où m est un entier égal ou inférieur à n mais supérieur à 2 ; - à produire un premier diagramme de rayonnement d'après les signaux à partir du premier instant ($t_1$) ;
      - à sauvegarder les valeurs représentant le diagramme de rayonnement à partir du premier instant $t_1$ ;

    étape b) - à couper ou réduire le signal provenant d'un élément d'antenne (2'), placé entre les deux éléments (2) d'antenne les plus à l'extérieur des m éléments d'antenne, à un second instant ($t_2$) ;

      - à recevoir des signaux analogiques sur la totalité des m éléments d'antenne (2) à l'exception de l'élément d'antenne coupé ou réduit (2') ; - à produire un second diagramme de rayonnement d'après les signaux à partir du second instant ($t_2$) ;
      - à sauvegarder les valeurs représentant le second diagramme de rayonnement ;

    étape c) - à additionner les valeurs du premier diagramme de rayonnement aux valeurs correspondantes du second diagramme de rayonnement et à produire ainsi une somme de valeurs représentant un diagramme de rayonnement de somme.

2. Procédé selon la revendication 1, **caractérisé en ce que :**

  - la séquence selon l'étape b) est répétée x fois jusqu'à ce que seulement les m - x éléments d'antenne (2) sur les extrémités les plus à l'extérieur restent, où x est un entier inférieur à m-2 et supérieur à zéro, désignant le nombre d'éléments d'antenne (2') supprimés ou réduits, et où :
  - l'étape c) est utilisée pour produire un diagramme de rayonnement de somme en additionnant toutes les valeurs correspondantes des diagrammes de rayonnement à partir de la totalité des x instants ($t_x$).

3. Procédé selon l'une quelconque des revendications précédentes, **caractérisé en ce que** les signaux analogiques sont convertis en signaux numériques par échantillonnage avant la production des diagrammes de rayonnement.

4. Procédé selon l'une quelconque des revendications précédentes, **caractérisé en ce que** les valeurs sont représentées dans les diagrammes de rayonnement en tant que gain (G ($\theta$)) pour un nombre d'angles ($\theta$).

5. Procédé selon l'une quelconque des revendications précédentes, **caractérisé en ce que** la distance entre chacun des éléments d'antenne (2) est la longueur d'onde lambda divisée par deux ou moins.

6. Procédé selon l'une quelconque des revendications précédentes, **caractérisé en ce qu'**on fait varier l'angle ($\theta$) entre -$\pi$/2 et $\pi$/2.

7. Système d'antenne réseau (20) comportant une antenne réseau (1) ayant un nombre de n éléments d'antenne (2), où le système d'antenne réseau (20) comporte un moyen (21) destiné à accroître le rapport entre le lobe principal (5) et les lobes en treillis (7), lequel système comporte :

  - l'antenne réseau (1) conçue pour recevoir des signaux analogiques sur un nombre de m éléments (2) d'antenne réseau ; et
  - un moyen (22) destiné à produire un diagramme de rayonnement pour le réseau à partir des valeurs numériques des signaux analogiques,

le système étant **caractérisé en ce qu'**il comporte :

a)

- l'antenne réseau (1) recevant des signaux analogiques sur la totalité des m éléments d'antenne (2) à un premier instant ($t_1$), où m est un entier égal ou inférieur à n, mais supérieur à 2 ;
- un moyen (22) destiné à produire un premier diagramme de rayonnement pour le réseau (1) d'après les valeurs numériques des signaux analogiques à partir de l'instant ($t_1$) ;
- un moyen (23) sauvegardant les valeurs représentant le diagramme de rayonnement à partir du premier instant ($t_1$),

b)

- un moyen (24) coupant ou réduisant le signal provenant d'un élément d'antenne (2'), situé entre les deux éléments d'antennes (2) les plus à l'extérieur des m éléments d'antenne, à un second instant ($t_2$) ;
- l'antenne réseau (1) recevant des signaux analogiques sur la totalité des m éléments d'antenne (2) à l'exception de l'élément d'antenne (2') coupé ou réduit ;
- un moyen (22) produisant un second diagramme de rayonnement pour le réseau d'après les valeurs numériques des signaux analogiques à partir du second instant ($t_2$),
- un moyen (23) sauvegardant les valeurs représentant le second diagramme de rayonnement ;

c)

- un moyen (25) additionnant les valeurs du premier diagramme de rayonnement aux valeurs correspondantes du second diagramme de rayonnement et produisant ainsi une somme de valeurs représentant un diagramme de rayonnement de somme.

8. Système d'antenne réseau (20) selon la revendication 7, le système étant **caractérisé en ce qu'**il comporte :

- un moyen (22, 23, 24) destiné à répéter la séquence selon b) x fois jusqu'à ce que seuls les m-x éléments d'antenne (2) sur les extrémités les plus à l'extérieur restent, où x est un entier inférieur à m-2 et supérieur à zéro, désignant le nombre d'éléments d'antenne (2') supprimés ou réduits ; et
- un moyen (25) conforme à c) pour produire un diagramme de rayonnement de somme en additionnant toutes les valeurs correspondantes des diagrammes de rayonnement à partir de la totalité des x instants ($t_x$).

9. Système d'antenne réseau (20) selon la revendication 7 ou 8, lequel système est **caractérisé en ce qu'**il comporte un moyen (26) destiné à convertir les signaux analogiques en signaux numériques par échantillonnage avant la production des diagrammes de rayonnement.

10. Système d'antenne réseau (20) selon l'une quelconque des revendications 7 à 9, lequel système est **caractérisé en ce qu'**il comporte un moyen (22) destiné à représenter les valeurs dans les diagrammes de rayonnement en tant que gain ($G(\theta)$) pour un nombre d'angles ($\theta$).

11. Système d'antenne réseau (20) selon l'une quelconque des revendications 7 à 10, **caractérisé en ce que** la distance entre chacun des éléments d'antenne (2) est la longueur d'onde lambda divisée par deux ou moins.

Fig. 1

EP 1 540 766 B1

Fig. 2

EP 1 540 766 B1

16

Fig. 3

$G(\Theta)$

$\underline{8'}$

6

5

7

$-\pi/2$

$\pi/2$

$\Theta$

Fig. 4

Fig. 5

Fig. 6

Fig. 7

EP 1 540 766 B1

G(Θ)

Fig. 8

11

10

12

13

-π/2

π/2

Θ

EP 1 540 766 B1

22

Fig. 9

Fig. 10

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US BF6178140 A